# DEMANDE DE BREVET EUROPEEN

(11) **EP 2 819 073 A1**
(43) Date de publication de la demande: **31.12.2014**
(21) Numéro de dépôt: 14167045.5
(22) Date de dépôt: 05.05.2014
(51) Int. Cl.: G06Q 10/10, G06Q 50/32, G06Q 10/08

(54) **Procédé et système de mesure de délais d'acheminement du courrier**

(30) Priorité: 26.06.2013 FR 1356130
(71) Demandeur: Solystic, 92220 Bagneux (FR)
(72) Inventeur: Buissonnet, Eric, 94200 Ivry sur Seine (FR); Caillon, Christophe, 91220 Bretigny sur Orge (FR)
(74) Mandataire: Prugneau, Philippe

(57) **Abrégé**

Un procédé pour mesurer des délais d'acheminement du courrier postal à travers un réseau de machines de tri postal (3,4,5,6) entre au moins un point de départ du courrier (1a) et un point d'arrivée du courrier (2a), comprend les étapes suivantes:
a) on mesure à l'aide de premiers simulacres d'article de courrier des premiers délais d'acheminement de ces premiers simulacres depuis le point de départ jusqu'à une certaine machine de tri postal du réseau;
b) on mesure à l'aide d'articles de courrier réels (12), des seconds délais d'acheminement de ces articles de courriers réels depuis ladite certaine machine de tri du réseau jusqu'à une autre machine de tri postal du réseau; et
c) on mesure à l'aide de seconds simulacres d'article de courrier, des troisièmes délais d'acheminement de ces seconds simulacres depuis ladite autre machine de tri postal jusqu'au point d'arrivée.

## Description

### Domaine technique

Le domaine de l'invention est celui de la mesure de la qualité de service entre Organisations Postales, cette qualité de service intervenant notamment dans le calcul des compensations financières entre ces Organisations. Plus particulièrement, l'invention concerne l'évaluation des performances logistiques des Postes notamment pour le courrier international en service "PRIORITAIRE", à savoir l'évaluation de délais d'acheminement de ce courrier qui transite par des machines de tri postal entre un point de départ situé dans un pays et un point d'arrivée situé dans un autre pays.

### Technique antérieure

Les Postes mesurent traditionnellement les délais d'acheminement du courrier de manière statistique, à l'aide de simulacres d'article de courrier ou courriers test qui sont introduits dans les flux de courrier depuis des points d'introduction prédéterminés qui sont par exemple des bureaux de départ du courrier d'une Poste nationale. Ces courriers test passent par les machines de tri de cette Poste nationale avec le courrier normal, transitent par des centres de tri et d'échange international pour arriver dans un autre pays où ils passent encore par des machines de tri postal d'une autre Poste Nationale avant d'arriver à des points de livraison prédéterminés, par exemple des bureaux d'arrivée du courrier de cette autre Poste Nationale.

Le document de brevet US-8346675 divulgue une méthode et un appareil pour mesurer les performances d'un service postal qui utilise des simulacres d'articles de courrier munis chacun d'une étiquette RFID.

La date et l'heure d'introduction de ces courriers test dans les points d'introduction et la date et l'heure d'arrivée des ces mêmes courriers test aux points de livraison sont relevés et mémorisés dans une base de données pour être analysés afin de déterminer des temps de parcours du courrier sur les différentes routes possible d'acheminement du courrier.

Le document de brevet US-2007/0250211 divulgue aussi une méthode pour mesurer les performances d'un service postal avec des simulacres d'articles de courrier et un réseau de capteurs distribués dans le réseau logistique du service postal pour remonter les dates et heures de passages des courrier test vers un système d'analyse.

Ces systèmes de mesure deviennent de plus en plus coûteux à mettre en oeuvre surtout pour mesurer des temps d'acheminement du courrier international du fait que le nombre de routes d'acheminement sur lesquelles il faut réaliser la mesure augmente à raison du nombre de combinaisons possibles entre tous les points d'introduction du courrier et tous les points de livraison du courrier.

En plus, pour que la mesure soit fiable, il est nécessaire de banaliser les simulacres d'article de courrier pour qu'ils passent de façon imperceptible devant les opérateurs sur les machines de tri ou autres ce qui est coûteux.

Plus particulièrement, pour faire de la mesure de qualité de service sur du courrier international, on peut être amené à utiliser plus de 300000 courriers test par an tout en limitant la mesure à un courrier test par jour et par route d'acheminement du courrier. Il est évident que plus il y a d'Organisations Postales qui collaborent entre elles pour assurer un service postal international, plus le nombre de routes d'acheminement devient important et plus il faut de courriers test pour réaliser les mesures de qualité de service.

Le but de l'invention est de proposer une solution pour améliorer la qualité de la mesure de performance tout en diminuant son coût de mise en oeuvre.

L'idée à la base de l'invention part du constat qu'au niveau des centres de tri et d'échange international, il y a une convergence et ensuite une divergence des routes d'acheminement et que sur le trajet du courrier entre ces centres d'échange il peut être avantageux de réaliser une mesure de performance à l'aide de courriers réels et non pas à l'aide de simulacres d'articles de courrier.

Plus particulièrement, l'invention a pour objet un procédé pour mesurer des délais d'acheminement du courrier postal à travers un réseau de machines de tri postal entre au moins un point de départ du courrier et un point d'arrivée du courrier, caractérisé en ce qu'il comprend les étapes suivantes:
a) on mesure à l'aide de premiers simulacres d'article de courrier des premiers délais d'acheminement de ces premiers simulacres depuis le point de départ jusqu'à une certaine machine de tri postal du réseau qui constitue un point de convergence des routes d'acheminement du courrier dans le réseau;
b) on mesure à l'aide d'articles de courrier réels, des seconds délais d'acheminement de ces articles de courriers réels depuis ladite certaine machine de tri du réseau jusqu'à une autre machine de tri postal du réseau qui constitue un point de divergence des routes d'acheminement du courrier dans le réseau; et
c) on mesure à l'aide de seconds simulacres d'article de courrier, des troisièmes délais d'acheminement de ces seconds simulacres depuis ladite autre machine de tri postal jusqu'au point d'arrivée ; et
d) le délai d'acheminement total entre ledit point de départ du courrier et ledit point d'arrivée du courrier étant calculé à partir desdits premiers, seconds et troisièmes délais d'acheminement.

Le procédé selon l'invention peut présenter les particularités suivantes :
- on forme une image numérique de chaque article de courrier réel comprenant une information d'adresse postale et on dérive de cette image numérique un identifiant unique pour cet article de courrier réel ce qui permet de faire un suivi du courrier réel sans toucher à l'intégrité de celui-ci;
- lesdits premiers et seconds simulacres d'article de courrier portent chacun un identificateur unique lisible par machine, par exemple un code barres ou encore un identifiant enregistré dans une puce RFID ce qui permet de faire un suivi sans contact de ceux-ci;
- on réalise la mesure des seconds délais d'acheminement sur un échantillonnage d'articles de courrier réels ce qui permet de fiabiliser la mesure.

L'invention s'étend à un système pour mesurer des délais d'acheminement du courrier postal dans un réseau de machines de tri postal, caractérisé en ce qu'il comprend:
- des simulacres d'article de courrier ayant chacun un code d'identification lisible par machine;
- des premiers capteurs de passage agencés pour détecter le passage d'un simulacre d'article de courrier et fournir le code d'identification du simulacre d'article de courrier en association avec une donnée de suivi temporel,
- des seconds capteurs de passage agencés pour détecter le passage d'un article de courrier, former une image numérique de cet article de courrier comprenant une information d'adresse postale et fournir pour cet article de courrier un identifiant numérique unique d'article de courrier en association avec une donnée de suivi temporel, cet identifiant unique étant dérivé de l'image numérique de cet article de courrier,
- et un équipement électronique pour maintenir une base de données dans laquelle sont stockés lesdits codes d'identification de simulacre d'article de courrier et lesdits identifiants numériques en association avec des données de suivi temporel.

### Présentation sommaire des dessins

La présente invention sera mieux comprise et d'autres avantages apparaîtront à la lecture de la description qui suit et des dessins annexés dans lesquels :
- la figure 1 illustre très schématiquement un réseau postal avec des machines de tri postal;
- la figure 2 illustre un courrier test avec une puce RFID
- la figure 3 illustre un équipement électronique de suivi temporel
- la figure 4 illustre la base de données de l'équipement de suivi temporel du courrier pour la mesure des performances d'un réseau postal

### Description des modes de réalisation

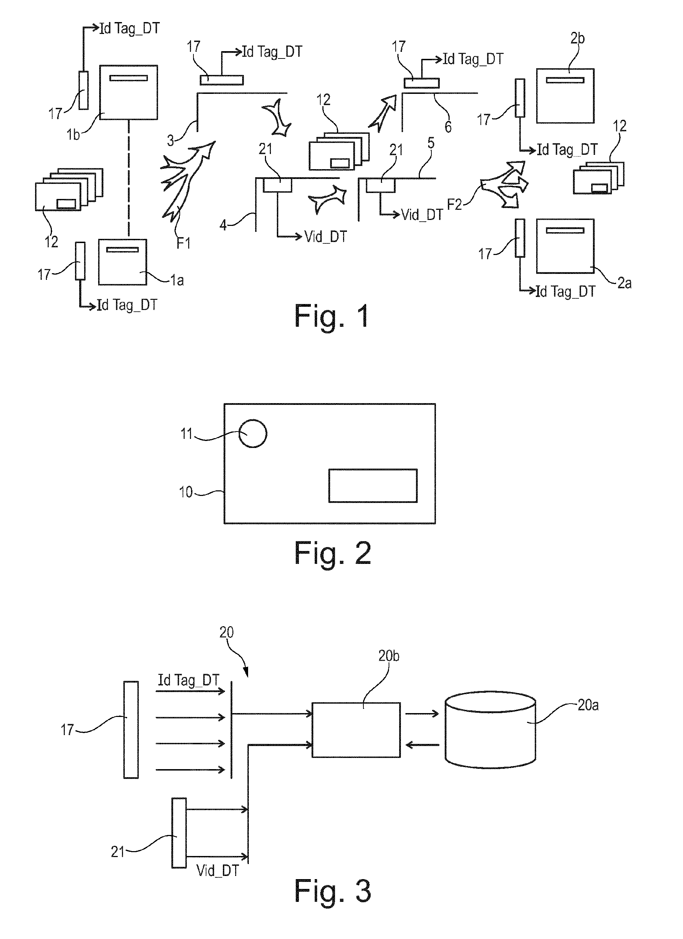

Sur la figure 1, on a illustré très schématiquement à titre d'exemple l'architecture d'un réseau logistique pour le tri acheminement et distribution du courrier postal international notamment entre ici seulement deux Postes nationales.

Le réseau comprend ici des premiers bureaux de poste 1a, 1 b d'une première Poste et des seconds bureaux de poste 2a, 2b d'une seconde Poste. Pour simplifier, du point de vue de la mesure de qualité de service du courrier international, on considère que les premiers bureaux de poste 1 a, 1 b sont des bureaux de départ du courrier international et les seconds bureaux de poste sont des bureaux d'arrivée du courrier international.

En variante, le point de départ pourra être la remise par l'émetteur du courrier test à son bureau de poste ou dans une boîte aux lettres, le point d'arrivée pourra être la réception du courrier test par le destinataire à son lieu de résidence ou de travail.

Il est entendu que la première Poste peut avoir un très grand nombre de bureaux de poste tels que 1a,1b et que la seconde Poste peut aussi avoir un très grand nombre de bureaux de poste tels que 2a,2b.

L'invention a pour objet la mesure des délais d'acheminement du courrier, plus particulièrement du courrier international en service "PRIORITAIRE", entre les bureaux de poste de départ et les bureaux de poste d'arrivée sur les différentes routes d'acheminement du courrier.

Sur la figure 1, on a illustré aussi des machines de tri telles que 3 et 4 dans le pays de départ du courrier qui font partie de centres de tri de la première Poste, la machine de tri 4 étant la plus en aval dans le tri du courrier dans le pays de départ et faisant de façon connue partie d'un centre de tri et d'échange international du pays de départ.

On a encore illustré des machines de tri telles que 5 et 6 dans le pays d'arrivée du courrier qui font partie de centres de tri de la seconde Poste, la machine de tri 5 étant la plus en amont dans le tri du courrier dans le pays d'arrivée et faisant partie aussi d'un centre de tri et d'échange international du pays d'arrivée.

Il est entendu que dans chaque Poste, le courrier peut être trié en plusieurs passes de tri sur différentes machines de tri et donc on peut avoir un grand nombre de machines de tri telles que 3,4,5 et 6 en cascade ou en parallèle.

Le procédé selon l'invention pour mesurer des délais d'acheminement du courrier postal sur une route d'acheminement du courrier dans le réseau, par exemple la route définie entre le bureau de poste de départ 1a et le bureau de poste d'arrivée 2a, à travers le réseau de machines de tri 3,4,5,6, est basé sur un découpage de la route d'acheminement en trois tronçons adjacents P1, P2 et P3.

Le tronçon P1 va ici du point de départ du courrier, ici le bureau de poste 1a, jusqu'à une machine de tri, par exemple une machine de tri du centre de tri et d'échange de la Poste de départ, ici la machine de tri 4.

Le tronçon P2 va d'une machine de tri de la Poste de départ, et plus spécifiquement une machine de tri du centre de tri et d'échange international ici la machine de tri 4, jusqu'à une autre machine de tri de la Poste d'arrivée, et plus spécifiquement une machine de tri du centre de tri et d'échange international de la Poste d'arrivée, ici la machine de tri 5. A noter qu'à cet endroit du réseau, on a une convergence suivie d'une divergence des routes d'acheminement du courrier comme illustré par les flèches F1 et F2 (et inversement dans l'autre sens des routes d'acheminement).

Le tronçon P3 va d'une machine de tri de la Poste d'arrivée, par exemple une machine de tri du centre de tri et d'échange international de la Poste d'arrivée, ici la machine de tri 5, jusqu'au point d'arrivée du courrier, ici le bureau de poste 2a.

Selon l'invention, les mesures des délais d'acheminement du courrier sur les tronçons P1 et P3 sont réalisées avec des simulacres d'articles de courrier illustrés par 10 sur la figure 2, c'est à dire des courriers test ou courriers factices. Ces courriers test sont conçus pour être banalisés dans le flux du courrier normal. Chaque courrier test 10 comporte un identifiant unique lisible par machine, par exemple un code barres ou encore un identifiant enregistré dans une puce RFID 11 placée à l'intérieur de l'enveloppe du courrier test 10.

Pour détecter le passage de ce type de courrier test à puce RFID, on peut utiliser des capteurs RFID placés sur portiques ou encore dans les machines de tri. Les capteurs RFID placés sur portiques permettent de détecter le passage des courriers test à l'entrée ou à la sortie de bureaux de poste.

Selon l'invention, les mesures de délais d'acheminement sur le tronçon P2 d'une route est réalisé avec du courrier réel indiqué par 12 sur la figure 1 et en utilisant en particulier une technique d'identification de chaque article de courrier réel sans impression, de préférence en dérivant un identifiant unique pour un article de courrier à partir d'une image numérique de celui-ci comportant une information d'adresse postale qui a été reconnue automatiquement. Cette mesure de performance sur le tronçon P2 peut donc être réalisée en continue sur un grand nombre d'échantillons ce qui contribue à l'obtention d'une bonne fiabilité de la mesure. Comme elle est mise en oeuvre principalement par logiciel, elle a peu d'impact sur la structure des machines de tri ainsi que sur le procédé de tri et ne touche pas à l'intégrité des articles de courrier réels.

En découpant ainsi en trois tronçons les routes d'acheminement du courrier, on peut réduire le nombre de courriers test nécessaires à la mesure des performances sur les tronçons P1 et P3.

Il est évident que les courriers test 10 utilisé pour une mesure de délais sur un tronçon P1 peuvent être utilisés pour la mesure de délais sur un tronçon P3 d'une route d'acheminement.

Le système pour mesurer les délais d'acheminement du courrier selon l'invention comprend des premiers capteurs de passage de préférence sans contact 17, ici des capteurs RFID placés sur portique respectivement dans les bureaux de poste de départ, dans l'exemple le bureau de poste 1 a, et d'arrivée, dans l'exemple le bureau de poste 2a, ou encore dans les machines de tri des centres de tri (par exemple en aval des dépileurs) sur le convoyeur de tri de la machine, ces capteurs 17 étant aptes à détecter et relever le code d'identification IdTag d'un courrier test et à lui associer une donnée temporelle incluant la date et l'heure de la détection DT. D'autres informations peuvent encore être associées à la date comme un numéro de machine ou une référence de localisation du relevé. Il est entendu que ces capteurs 17 doivent être compatibles avec la vitesse de déplacement des courriers test dans le flux du courrier réel transitant dans les convoyeurs des machines de tri postal.

Les données de suivi temporel DT en association avec les codes d'identifications IdTag sont envoyées par un réseau de communication comme Internet à un équipement électronique distant de suivi temporel 20 illustré sur la figure 3 et comprenant une base de données 20a accessible par une unité de traitement de données 20b.

Les informations fournies par les capteurs peuvent être complétées par l'émetteur et le destinataire des courriers test au moment de l'envoi et de la réception de ces courriers test, par exemple en se connectant à l'équipement électronique distant de suivi temporel 20 par une connexion Internet.

Par ailleurs, au niveau des machines de tri 4 et 5 aux deux extrémités d'un tronçon P2, le système de mesure comprend des seconds capteurs de passage 21 agencés pour détecter le passage d'un article de courrier réel tel que 12, et former (ou récupérer) une image numérique de cet article de courrier comprenant une information d'adresse postale de destinataire (ayant été reconnue automatiquement par machine) et fournir pour cet article de courrier un identifiant numérique unique Vid d'article de courrier dérivé de cette image numérique en association avec une donnée de suivi temporel DT incluant une date et une heure de détection. Cet identifiant unique Vid peut être calculé comme par exemple décrit dans le document de brevet FR-2841673 et comprendre deux composantes indépendantes, l'une dérivée à partir des pixels de l'image, l'autre dérivée de l'adresse de destinataire reconnue automatiquement.

Les capteurs 21 transmettent les identifiants Vid en association avec les données de suivi temporel DT à l'équipement 20 via un réseau de communication électronique comme pour les capteurs 17.

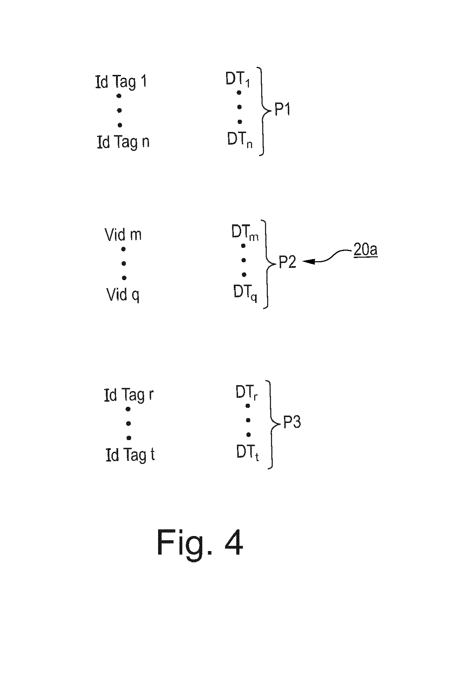

Comme illustré par la figure 4, dans la base de données 20a, l'unité 20b archive au fil de l'eau pour chaque route d'acheminement examinée des codes d'identification Id-Tag1...ld-Tagn, IdTagr...IdTagt en association respectivement avec des données de suivi temporel DT1...DTn, DTr...DTt pour les tronçons P1 et P3 de la route et des identifiants Vidm...Vidq en association avec des données de suivi temporel DTm...DTq pour le tronçon P2 de la route. Il est entendu qu'il n'y a pas besoin de synchronisation entre les mesures sur les tronçons P1, P2 et P3.

A partir des données de suivi temporel archivées dans la base de données 20b pour chaque tronçon P1,P2 et P3 d'une route, l'unité 20b est apte à déterminer des statistiques sur le temps d'acheminement total sur cette route comme indiqué plus bas.

En pratique, des images de ces articles de courrier réel sont enregistrées par exemple par la machine de tri 4 sous une forme compressée dans un fichier. Ce fichier est transféré et stocké ensuite dans la machine de tri 5 pour la détection des articles de courrier de l'échantillonnage. Il est entendu que le stockage du fichier d'images peut aussi être réalisé sur un ou des serveurs de données distants connectés à ces machines de tri 4 et 5 sans sortir du cadre de l'invention.

On peut comprendre que l'unité 20b pour pouvoir faire des mesures de délais d'acheminement du courrier T sur la route entre le point de départ 1a et le point d'arrivée 2a est apte à:
- rechercher dans la base de données 20a deux codes d'identification identiques d'un courrier test, par exemple IdTag1 et IdTagn et par association de ces codes récupérer deux dates de passage de ce courrier test, ici DT1 et DTn et, par différence de ces deux dates de passage calculer un premier temps de parcours T1 du courrier test sur le tronçon P1 (DTn-DT1)
- rechercher dans la base de données 20a deux identifiants numériques d'un courrier réel concordants, par exemple Vidm et Vidq et par association des identifiant récupérer deux dates de passage du courrier réel DTm et DTq, et encore par différence calculer un second temps de parcours T2 du courrier réel (DTq-DTm)
- et rechercher encore dans la base de données 20a deux autres codes d'identification identiques d'un courrier test, par exemple IdTagr et IdTagt et par association des codes récupérer deux dates de passage de ce courrier test, ici DTr et DTt et, par différence de ces deux dates de passage, calculer un troisième temps de parcours T3 du courrier test sur le tronçon P3 (DTt-DTr),
et enfin à additionner les temps de parcours T1, T2 et T3 pour calculer des valeurs statistiques du temps d'acheminement total du courrier sur la route entre les points 1 a et 2a.

L'équipement 20 peut fonctionner avec une série de courriers test successifs sur une même route d'acheminement et un échantillonnage sur les articles de courrier réel de sorte à produire des données statistiques de minimum, maximum, moyenne, etc... pour le temps de parcours total sur la route d'acheminement.

On comprendra que pour fiabiliser les mesures, les capteurs 17 pourront être placés au plus proche des capteurs 21 à la jonction des tronçons P1 et P2 et à la jonction des tronçons P2 et P3, par exemple dans une même machine de tri postal.

Un tel système de mesure selon l'invention est bien adapté pour une mesure précise et fiable des délais d'acheminement du courrier international en service "PRIORITAIRE" selon l'étude dite "UNEX" de "International Post Corporation". Mais le procédé et le système de mesure selon l'invention peuvent trouver des applications à d'autres types de courrier postal ou analogue.

## Revendications

1. Procédé pour mesurer des délais d'acheminement du courrier postal à travers un réseau de machines de tri postal (4,5,6,7) entre au moins un point de départ du courrier (1a) et un point d'arrivée du courrier (2a), **caractérisé en ce qu'**il comprend les étapes suivantes:
a) on mesure à l'aide de premiers simulacres d'article de courrier (10) des premiers délais d'acheminement de ces premiers simulacres depuis le point de départ jusqu'à une certaine machine de tri postal du réseau qui constitue un point de convergence des routes d'acheminement du courrier dans le réseau;
b) on mesure à l'aide d'articles de courrier réels (12), des seconds délais d'acheminement de ces articles de courriers réels depuis ladite certaine machine de tri du réseau jusqu'à une autre machine de tri postal du réseau qui constitue un point de divergence des routes d'acheminements du courrier dans le réseau; et
c) on mesure à l'aide de seconds simulacres d'article de courrier (10), des troisièmes délais d'acheminement de ces seconds simulacres depuis ladite autre machine de tri postal jusqu'au point d'arrivée ; et
d) le délai d'acheminement total entre ledit point de départ du courrier et ledit point d'arrivée du courrier étant calculé à partir desdits premiers, seconds et troisièmes délais d'acheminement.

2. Procédé selon la revendication 1, **caractérisé en ce que** on forme une image numérique de chaque article de courrier réel comprenant une information d'adresse postale et on dérive de cette image numérique (Vid) un identifiant unique pour cet article de courrier réel.

3. Procédé selon la revendication 1, **caractérisé en ce que** lesdits premiers et seconds simulacres d'article de courrier portent chacun un identificateur unique (IdTag) lisible par machine.

4. Procédé selon la revendication 3, **caractérisé en ce que** ledit identificateur unique (IdTag) lisible par machine est contenu dans une puce RFID (11).

5. Procédé selon la revendication 2, **caractérisé en ce qu'**on réalise la mesure des seconds délais d'acheminement sur un échantillonnage d'articles de courrier réels.

6. Procédé selon l'une des revendications précédentes, **caractérisé en ce que** les dites machines de tri postal font partie d'un centre de tri et d'échange de courrier international.

7. Système pour mesurer des délais d'acheminement du courrier postal dans un réseau de machines de tri postal, **caractérisé en ce qu'**il comprend:
- des simulacres d'article de courrier (10) ayant chacun un code d'identification lisible par machine;
- des premiers capteurs de passage (17) agencés pour détecter le passage d'un simulacre d'article de courrier et fournir le code d'identification du simulacre d'article de courrier en association avec une donnée de suivi temporel,
- des seconds capteurs de passage (21) agencés pour détecter le passage d'un article de courrier, former une image numérique de cet article de courrier comprenant une information d'adresse postale et fournir pour cet article de courrier un identifiant numérique unique d'article de courrier en association avec une donnée de suivi temporel, cet identifiant unique étant dérivé de l'image numérique de cet article de courrier,
- et un équipement électronique (20) pour maintenir une base de données dans laquelle sont stockés lesdits codes d'identification de simulacre d'article de courrier et lesdits identifiants numériques en association avec des données de suivi temporel.

8. Système selon la revendication 7, **caractérisé en ce que** chaque simulacre d'article de courrier comprend une puce RFID (11) dans laquelle est mémorisé un code d'identification de simulacre d'article de courrier.
